# FASCICULE DE BREVET EUROPEEN

(11) **EP 0 751 817 B1**
(45) Date de publication et mention de la délivrance du brevet: **17.12.2003**
(21) Numéro de dépôt: 96901855.5
(22) Date de dépôt: 25.01.1996
(51) Int. Cl.: B01D 69/10, B01D 71/02, B01D 39/20, C04B 35/49

(54) **SUPPORT POREUX INORGANIQUE POUR MEMBRANE DE FILTRATION ET PROCEDE DE FABRICATION**
ANORGANISCHER, PORÖSER TRÄGER FÜR EINE FILTRATIONSMEMBRAN UND HERSTELLUNGSVERFAHREN
INORGANIC POROUS SUPPORT FOR A FILTRATION MEMBRANE AND MANUFACTURING PROCESS

(30) Priorité: 25.01.1995 FR 9501063
(43) Date de publication de la demande: 08.01.1997
(73) Titulaire: T.A.M.I. INDUSTRIES, F-26110 Nyons (FR)
(72) Inventeur: GRANGEON, André, F-84600 Valreas (FR); LESCOCHE, Philippe, F-26110 Nyons (FR)
(74) Mandataire: Thibault, Jean-Marc
(86) Numéro de dépôt international: FR9600128
(87) Numéro de publication internationale: WO96022829

(56) Documents cités:
- EP-A- 0 236 249
- EP-A- 0 586 102
- FR-A- 2 693 921
- US-A- 4 758 542
- US-A- 5 175 132

## Description

### DOMAINE TECHNIQUE :

La présente invention concerne le domaine technique de la séparation moléculaire ou particulaire mettant en oeuvre des éléments de séparation appelés généralement membranes, réalisées à partir de matériaux inorganiques et constituées d'un support poreux sur lequel est déposée au moins une couche séparatrice dont la nature et la morphologie sont adaptées pour assurer la séparation des molécules ou des particules contenues dans le milieu fluide à traiter.

L'objet de l'invention vise, plus précisément, la réalisation des supports poreux inorganiques constitutifs des membranes inorganiques.

### TECHNIQUE ANTERIEURE :

D'une manière classique, une membrane se définit par l'association d'un support poreux en matière céramique sur lequel sont déposées des couches en matière inorganique liées entre elles et au support, par frittage. Le rôle des couches est d'assurer la séparation des espèces moléculaires ou particulaires, tandis que le rôle du support est de permettre, par sa résistance mécanique, la réalisation de couches de faible épaisseur. Ainsi, le support doit permettre la résistance mécanique sans participer à la résistance hydraulique de la membrane, tandis que la couche doit définir la perméabilité sans participer à la résistance mécanique.

De nombreux types de supports existent dans l'état de la technique. Le type le plus courant est un support en alumine pure. Sa fabrication comprend des opérations de mélange entre l'alumine et divers adjuvants tels qu'un liant organique permettant de lier les grains entre-eux avant le frittage, un lubrifiant permettant de favoriser l'écoulement de la pâte dans la filière lors de la mise en forme, ou d'un tension actif favorisant le mouillage des particules par le liquide suspensif. La pâte obtenue subit ensuite une opération de mise en forme à travers une filière dont la forme est adaptée à la géométrie future du support. Après séchage du produit filé, une cuisson dite de dégourdi est réalisée pour permettre un début de réaction entre les particules d'alumine, afin d'éliminer, notamment, toutes les matières organiques qui pourraient inhiber la réaction de frittage. Ensuite, une opération de frittage par traitement thermique est réalisée à une température élevée. Pour l'alumine, la température de frittage est d'environ 1 800°C.

Classiquement, le frittage correspond à la réaction à l'état solide entre des particules minérales qui, d'une manière simplifiée, peuvent être considérées comme se présentant sous une forme sphérique. Après les opérations de mise en forme et de séchage, les particules sont en contact les unes avec les autres. Chaque point de contact définit, en sorte, un col de diamètre pratiquement nul et le volume autour d'un col peut être assimilé à la partie concave d'un ménisque capillaire. Durant le traitement thermique, les particules subissent des transformations d'état. Deux paramètres principaux règlent le frittage, à savoir, d'une part, le diamètre équivalent de la partie concave autour de chaque col, qui dépend de la taille des particules et, d'autre part, la viscosité de la matière, ainsi que sa pression partielle, qui dépendent de la température du traitement thermique. Ainsi, plus la taille des particules est faible, plus le diamètre équivalent des parties concaves est également faible. Une forte viscosité est donc suffisante pour réaliser la formation des cols, de sorte que la température du traitement thermique est faible. Inversement, plus la taille des particules est importante, plus la viscosité doit être faible, ce qui entraîne une valeur élevée de la température de frittage. Cependant, l'augmentation de la quantité d'énergie fournie conduit à l'obtention d'un support fritté possédant une densité égale à celle des particules, de sorte que la porosité est nulle.

Pour obtenir un corps poreux après frittage, il convient donc de limiter la quantité d'énergie thermique, de manière à obtenir des cols de volume suffisant, afin que la porosité soit importante et que la résistance mécanique soit élevée. Il doit être considéré que plus la température de frittage est élevée, plus les cols sont importants, ce qui conduit à l'obtention d'un support présentant une forte résistance mécanique et une faible porosité.

Pour tenter de remédier à cette contradiction, la demande de brevet **FR 2 693 921** a proposé de réaliser un support inorganique dont la composition minérale comprend de l'alumine stable thermiquement associée à un oxyde de titane. La liaison entre les particules d'alumine est réalisée par l'oxyde de titane qui joue le rôle d'un liant minéral. Cette méthode permet de réaliser des frittages à des températures beaucoup plus faibles que dans le cas de l'alumine pure. Toutefois, si la température de frittage est augmentée jusqu'à des valeurs supérieures à 1 275 °C, la réaction entre l'alumine et le titane fait apparaître une phase aluminate de titane qui possède un coefficient de dilation linéaire très différent de ceux de l'alumine et de l'oxyde de titane. Ainsi, durant le refroidissement consécutif au frittage, cette différence de dilatation fait apparaître des contraintes qui engendrent des fissurations. Le produit obtenu est fragile et non utilisable comme support de membrane.

Il est connu également, par le brevet **US-A-5 175 132,** une composition céramique comportant une charge minérale et un liant minéral formé d'un mélange d'oxydes d'au moins deux métaux. Cette composition est mise au point pour permettre une température de frittage comprise entre 800 et 1100° C et l'obtention d'un support non poreux. Il est clair qu'un tel document ne permet pas d'obtenir un support poreux adapté à la filtration. De plus, un tel document ne permet pas de résoudre le problème de fissuration du support qui apparaît par la présence d'une phase aluminate de titane, à des températures supérieures à 1 275° C.

### EXPOSE DE L'INVENTION :

L'objet de l'invention vise à remédier aux inconvénients énoncés ci-dessus en proposant un support inorganique pour la filtration, adapté pour présenter une bonne résistance mécanique par la non limitation de la température de frittage, tout en offrant une porosité élevée supérieure à 25 %.

L'invention comprend un support inorganique destiné à constituer un support pour une membrane de filtration, le support :
- présentant une porosité supérieure à 25 %,
- une résistance mécanique définie par la valeur de la contrainte en flexion pour les supports plans, supérieure à 15 MégaPascals, et par la valeur de la contrainte en traction pour les supports tubulaires, supérieure à 5 MégaPascals,
- étant obtenu par frittage à une température comprise entre supérieure à 1 300°C et 1 500°C,
- comportant :
   - une charge minérale :
      * présentant une granulométrie supérieure à 20 µm,
      * étant un composé métallique contenant un seul métal pris parmi les métaux suivants : aluminium, silicium et titanium,
   - et un liant minéral dont le pourcentage pondéral par rapport à la charge est inférieur à 70 %, ledit liant minéral étant soit un grès, soit un titanate de formule **Ti**_{**x**} **M**_{**y**} **O**_{**((4x + vy) /2)**}**,** avec **x** = nombre d'atome gramme de **Ti, y** = nombre d'atome gramme de **M, v** = valence de **M,** où **M** est un métal pris parmi le zirconium, le calcium, le cuivre, le manganèse ou l'aluminium, de manière à comporter un mélange d'oxydes de Ti et M,
- et ne comportant pas de l'aluminate de titane (Al₂TiO₅) susceptible de créer des microfissures au support.

### MEILLEURE MANIERE DE REALISER L'INVENTION :

L'objet de l'invention vise donc à constituer un support inorganique comprenant un premier type de particules, appelé charge, présentant une granulométrie supérieure à 20 µm. Dans les conditions de traitement thermique du corps poreux, il n'apparaît aucun ramollissement superficiel des particules de la charge, de sorte que sa matière ne peut participer à la formation des cols, tels que définis dans la préambule de la présente demande de brevet. Inversement, et toujours dans les conditions de traitement thermique du corps poreux, le deuxième type de particules, entrant dans la composition du support, subit un ramollissement superficiel important qui lui permet de se coller sur les particules de la charge. Ce deuxième type de particules est appelé liant minéral.

Il apparaît ainsi que pour une même température de frittage, la charge minérale et le liant minéral présentent des viscosités très différentes. Pour la température de frittage, prise entre >1300 et 1500° C, la charge minérale se comporte comme une ossature, dans la mesure où elle n'est pas suffisamment réagissante, tandis que le liant minéral assure le lien entre les particules de la charge pour permettre la cohésion du support poreux. Il doit être compris que la charge minérale est considérée comme non réagissante dans les conditions de traitement thermique du support poreux, si ce dernier ne comprenait que la charge. Il doit être considéré que la charge minérale est un composé métallique contenant un seul métal pris parmi les métaux suivants : aluminium, silicium et titatium. De plus, le liant minéral se présente sous la forme d'un mélange d'oxydes d'au moins deux métaux, de façon que n'apparaisse jamais, dans les conditions de traitement thermique du support poreux, un composé qui provoquerait l'existence de microfissures. Le liant minéral réagit avec la charge, de manière à obtenir un support présentant une porosité supérieure à 25 % et une résistance mécanique définie, pour des formes planes du support, par la valeur de la contrainte en flexion supérieure à 15 MégaPascals.

Le tableau 1 ci-dessous donne le % de la charge par rapport au liant minéral, pour deux valeurs extrêmes de la porosité et pour deux liants minéraux, à savoir le grès et le titane de zirconium (TiZrO₄).

**TABLEAU 1**

| Porosité à obtenir | Porosité de la charge = 25,95 % | | Porosité de la charge = 47,64 % | |
|---|---|---|---|---|
| | liant = grès | liant = TiZrO₄ | liant = grès | liant = TiZrO₄ |
| 20 % | 4,5 % | 8,7 % | 29,83 % | 57,64 % |
| 30 % | impossible | impossible | 19,15 % | 37,01 % |
| 40 % | impossible | impossible | 8,47 % | 16,38 % |

Dans le **tableau 1,** il a été utilisé, à titre de charge, du corindon.

Pour réaliser un support adapté à la filtration en milieu liquide, il faut une texture comprenant un diamètre moyen équivalent d'environ 5 à 6 µm et une porosité supérieure à 25 %. Le **tableau 1** permet d'approcher les proportions du liant minéral selon sa nature et la porosité à obtenir. Le pourcentage pondéral du liant par rapport à la charge est inférieur à 70 % .

Dans une première variante de réalisation, le liant minéral utilisé est un grès. Même si la définition du grès est peu précise et ne correspond pas une composition exacte, il est admis que les grès font partie des groupes de minéraux suivants, à savoir des nesosilicates, des sorosilicates, des cyclosilicates, des inosilicates, des phyllosilicates et des tectosilicates. La description qui suit décrit un exemple de réalisation d'un support dont le liant minéral utilisé est un grès.

### EXEMPLE 1 :

Le grès utilisé est réalisé à partir d'un mélange de trois terres et sa composition finale en pourcentage comprend :
- SiO2 : 67
- Al203 : 22,1
- Fe2O3 : 1, 63
- CaO : 0,92
- MgO : 0,1
- TiO2 : 0, 66
- Na2O : 3,4
- K2O : 0,84.

Le corindon est utilisé comme exemple de charge dont la granulométrie est de 63 µm. Le grès et le corindon sont mélangés par broyage.

La suspension comprend :
- les produits minéraux (grès et corindon),
- un liant sous la forme de lignosulfonate de sodium,
- un agent de pressage sous la forme de cires cristallines en émulsion avec de l'eau,
- de l'eau comme agent dispersif.

Après broyage dans un broyeur à boulets, la suspension est séchée dans un atomiseur.

La poudre obtenue est alors comprimée sous la forme de plaquette de 10 cm x 10 cm pour une épaisseur de 2 mm.

Le **tableau 2** ci-dessous montre l'influence de la proportion de la charge (la température de frittage n'étant pas selon les revendications).

**TABLEAU 2**

| % final d'Al2O3 | % de SiO2 | Granulométrie du corindon (µm) | % de corindon | T' de frittage (°C) | Flexion à rupture (MPa) | Φ des pores (µm) | Porosité (%) |
|---|---|---|---|---|---|---|---|
| 61,05 | 33,5 | 63 | 50 | 1 180 | 25 | 5 | 31,0 |
| 68,84 | 26,8 | 63 | 60 | 1 180 | 27 | 5 | 31,0 |
| 76,83 | 20,1 | 63 | 70 | 1 180 | 20 | 4 | 22,3 |
| 84,42 | 13,4 | 63 | 80 | 1 180 | 18 | 4 | 27,9 |

Quelle que soit la proportion de corindon, la distribution des pores est centrée sur un seul pic. Les valeurs de la porosité varient avec la proportion de la charge.

La valeur de la résistance à la flexion montre que le produit est bien fritté pour une température de 1 180 °C et que l'effet de fondant minéral du grès est efficace. Toutefois, cette résistance décroît avec l'augmentation de la proportion de la charge.

Cet effet de liant minéral, entre le corindon et le grès, peut être appliqué à d'autres charges que le corindon.

Ainsi, peuvent être utilisés :
- le carbure de silicium,
- l'oxyde de titane sous forme de sable de rutile.

Une deuxième forme de réalisation de l'invention consiste à utiliser, en tant que liant minéral, un titanate de formule TiMO où M est un métal. A titre de métal, il a été retenu essentiellement le silicium, l'aluminium et, de préférence, le zirconium, le calcium, le cuivre et le manganèse.

Le titanate de formule TiMO peut être réalisé, principalement, de trois manières.

### EXEMPLE 2 :

Le titanate est réalisé avant le mélange avec l'alumine. Ainsi, chaque titanate utilisé, tel que du titanate de calcium, du titanate de cuivre, du titanate de zirconium ou du titane de manganèse, correspond à des produits usuels du commerce.

Chaque titanate est respectivement mélangé avec du corindon de granulométrie 22,8 µm, de manière que le rapport d'alumine sur titanate soit égal à 2. La séquence de mise en forme comprend :
- un broyage en milieu aqueux du mélange alumine/titanate en présence d'un défloculant,
- un séchage,
- un ajout d'agents de pressage sous la forme de cire liquide,
- une granulation de ce mélange dans un granuleur EIRICH,
- et le pressage sous forme de plaquettes, par exemple, de 100 mm x 100 mm x 2,5 mm.

Le frittage est réalisé à différentes températures et la solidité des plaquettes est mesurée par un test de flexion à rupture. La porosité et le diamètre moyen sont définis par porométrie mercure. Le tableau 3 ci-dessous montre les valeurs mesurées.

**TABLEAU 3**

| Température de frittage (°C) | Métal ajouté : zirconium | | Métal ajouté : calcium | | Métal ajouté : cuivre | | Métal ajouté : manganèse | |
|---|---|---|---|---|---|---|---|---|
| | Diamètre moyen des pores (µm) | Flexion à rupture (MPa) | Diamètre moyen des pores (µm) | Flexion à rupture (MPa) | Diamètre moyen des pores (µm) | Flexion à rupture (MPa) | Diamètre moyen des pores (µm) | Flexion à rupture (MPa) |
| 1 180 | 2,5 | 10 | 1,9 | 10 | 2,1 | 27 | 2,5 | 24 |
| 1 240 | 3,0 | 15 | 2,5 | 10 | 3,5 | 30 | 3,4 | 30 |
| 1 280 | 3,5 | 15 | 3,1 | 15 | 4,2 | 40 | 5,0 | 35 |
| 1300 | 4,2 | 18 | 3,9 | 16 | 5,6 | 48 | 6,4 | 44 |
| 1 375 | 5,8 | 31 | 5,1 | 30 | 6,5 | 56 | 7,2 | 54 |

Ces résultats montrent que la résistance mécanique croît avec la température quel que soit le métal ajouté. Ainsi, la température de 1 280°C peut être largement dépassée sans qu'apparaîsse une chute de la résistance mécanique. Il peut ainsi être envisagé d'effectuer le frittage pour des températures pouvant atteindre 1 500 °C. Parmi les métaux sélectionnés, le cuivre et le manganèse ont un effet beaucoup plus marqué que le calcium et le zirconium.

### EXEMPLE 3 :

Le titanate de formule TiMO peut être réalisé pendant le frittage du corps poreux en ajoutant le métal sous la forme d'un oxyde métallique.

Les oxydes de cuivre, de manganèse, de calcium et de zirconium présentent une granulométrie inférieure à 325 mesh (46 µm).

La séquence de mise en forme comprend :
- le broyage en milieu aqueux du mélange alumine/oxyde de titane/oxydes du métal M, en présence d'un défloculant,
- un séchage,
- un ajout d'agents de pressage sous la forme de cire liquide,
- la granulation de ce mélange dans un granuleur EIRICH,
- et le pressage sous la forme de plaquettes de 100 mm x 100 mmm x 2,5 mm.

Le frittage est réalisé à différentes températures et la solidité des plaquettes est mesurée par un test de flexion à rupture. La porosité et le diamètre moyen sont définis par porométrie mercure.

Le **tableau 4** ci-dessous montre les valeurs mesurées.

**TABLEAU 4**

| Température de frittage (°C) | Métal ajouté : zirconium | | Métal ajouté : calcium | | Métal ajouté : cuivre | | Métal ajouté : manganèse | |
|---|---|---|---|---|---|---|---|---|
| | Diamètre moyen des pores (µm) | Flexion à rupture (MPa) | Diamètre moyen des pores (µm) | Flexion à rupture (MPa) | Diamètre moyen des pores (µm) | Flexion à rupture (MPa) | Diamètre moyen des pores (µm) | Flexion à rupture (MPa) |
| 1 180 | | friable | | friable | | friable | | friable |
| 1240 | 2,5 | 9 | 2,3 | 8 | 2,8 | 15 | 3,3 | 19 |
| 1 280 | 3,0 | 12 | 3,1 | 12 | 3,7 | 25 | 4,1 | 27 |
| 1300 | 3,8 | 15 | 3,5 | 14 | 5,1 | 32 | 5,6 | 36 |
| 1 375 | 4,9 | 29 | 5 | 28 | 6,6 | 45 | 7,1 | 51 |

Conformément aux résultats obtenus dans le **tableau 3**, la résistance mécanique du support poreux augmente avec: la température de frittage, même pour des températures supérieures de 1 280°C. Il doit être considéré qu'il n'apparaît pas de phase aluminate de titane, ce qui permet d'augmenter la température de frittage et, par suite, la solidité du support obtenu.

L'efficacité des différents métaux est dans le même ordre que dans l'action des titanates, à savoir par ordre décroissant le manganèse, le cuivre, le zirconium et le calcium.

### EXEMPLE 4 :

Le titanate de formule TiMO peut être obtenu pendant le frittage en ajoutant le métal **M** sous la forme d'un sel métallique.

Ces métaux sont ajoutés sous la forme de nitrate, en raison de leur solubilité dans l'eau. La réalisation de ces compositions comprend :
- le broyage en milieu aqueux et en présence d'alumine, d'oxyde de titane, du nitrate du métal additionnel et d'un défloculant,
- un séchage,
- l'ajout d'agents de pressage sous la forme de cire liquide,
- la granulation de ce mélange dans un granuleur EIRICH,
- et le pressage sous la forme de plaquettes de 100 mm x 100 mm x 2,5 mm.

Lors du frittage, le métal additionnel réagit avec l'oxyde de titane pour former un titanate, ce qui évite la formation du titanate d'alumine.

Le **tableau 5** ci-dessous présente les résultats obtenus.

**TABLEAU 5**

| Température de frittage (°C) | Métal ajouté : zirconium | | Métal ajouté : calcium | | Métal ajouté : cuivre | | Métal ajouté : manganèse | |
|---|---|---|---|---|---|---|---|---|
| | Diamètre moyen des pores (µm) | Flexion à rupture (MPa) | Diamètre moyen des pores (µm) | Flexion à rupture (MPa) | Diamètre moyen des pores (µm) | Flexion à rupture (MPa) | Diamètre moyen des pores (µm) | Flexion à rupture (MPa) |
| 1 180 | 4,0 | 10 | 4,5 | 10 | 4,5 | 27 | 4,5 | 24 |
| 1 240 | 5,0 | 15 | 5,0 | 10 | 6,0 | 30 | 6,5 | 30 |
| 1 280 | 6,0 | 15 | 5,5 | 15 | 6,8 | 40 | 7,2 | 35 |
| 1 300 | 7,0 | 18 | 6,5 | 16 | 7,8 | 48 | 8,0 | 44 |
| 1 375 | 8,5 | 29 | 7,6 | 31 | 8,5 | 55 | 8,5 | 52 |

Quel que soit le métal ajouté, la flexion à la rupture croît quant la température augmente. Les résultats de résistance mécanique des plaquettes dans lesquelles le zirconium ou le calcium ont été ajoutés sont beaucoup plus faibles que ceux obtenus en présence de cuivre ou de manganèse. La température de 1 280 °C n'est plus un maximum pour la résistance mécanique, ce qui montre que la formation de l'aluminate de titane n'existe plus. Conformément à l'invention, il peut ainsi être obtenu un support présentant une résistance mécanique définie par la contrainte en flexion (ou à la rupture) supérieure à 15 MégaPascals.

En résumé, l'utilisation combinée d'une charge minérale et d'un liant, comportant au moins un oxyde d'un métal et un oxyde d'un autre métal, permet d'éviter, quelle que soit la température de traitement thermique, l'apparition d'un composé réduisant la résistance mécanique du support poreux. En effet, la présence d'oxydes d'au moins deux métaux dans la composition du liant minéral évite l'apparition d'un composé qui provoque des microfissures.

Les exemples ci-dessus montrent l'intérêt de l'invention pour des membranes minérales de géométrie plane. Il est clair que l'invention peut s'appliquer à des membranes de filtration présentant une forme différente, par exemple tubulaire.

La fabrication de tubes est une opération plus complexe que la réalisation de plans. La différence principale porte sur la mise en forme. Dans le cas des plans, cette dernière se réalise par pressage de poudres sèches. Le problème du séchage est ainsi évité.

Pour les tubes, la mise en forme s'effectue par filage d'une pâte qu'il convient de sécher correctement afin d'éviter des déformations importantes. Cette opération de séchage rend beaucoup plus complexe la fabrication des tubes.

Deux compositions ont été testées dans cet exemple :
- une composition selon l'invention à partir d'un mélange d'alumine et d'oxyde de titane, auquel on ajoute une très faible quantité d'oxyde de zirconium. Elle est appelée composition A ;
- une composition selon l'invention à partir d'un mélange d'alumine et d'oxyde de titane, auquel on ajoute une quantité importante d'oxyde de zirconium. Elle est appelée composition B.

La granulométrie de l'alumine pour ces deux compositions est égale à 29,2 µm.

Le tableau suivant donne les proportions respectives des différents composants.

| Référence de la composition | % d'alumine | % d'oxyde de titane | % d'oxyde de zirconium |
|---|---|---|---|
| A | 67,0 | 32,3 | 0,7 |
| B | 64,2 | 31,0 | 4,8 |

La mise sous forme de tubes de ces deux compositions s'effectue par le procédé d'extrusion, ce qui nécessite l'élaboration d'une pâte plastique.

La température de frittage des tubes est comprise entre 1200 et 1375° C. Après cette opération, les tubes sont caractérisés en porosité, résistance mécanique sous la forme d'une pression interne d'éclatement (valeur qui permet de déterminer la contrainte de traction) et en structure cristallographique, afin de rechercher la présence de la phase aluminate de titane (Al2TiO5).

Les résultats sont portés sur le tableau suivant.

| | Températures de frittage | | | | | | | | | | | | | |
|---|---|---|---|---|---|---|---|---|---|---|---|---|---|---|
| | 1 200° C | | 1 250° C | | 1 275° C | | 1 300° C | | 1 325° C | | 1 350° C | | 1 375° C | |
| Référence composition | A | B | A | B | A | B | A | B | A | B | A | B | A | B |
| Porosité (%) | 36 | 35 | 36 | 37 | 36 | 36 | 37 | 38 | 37 | 37 | 37 | 36 | 33 | 37 |
| Pression d'éclatement (MPa) | 2,1 | 2,1 | 3,7 | 3,6 | 4,4 | 4,7 | 5,7 | 5,3 | 6,6 | 6,2 | 6,2 | 6,3 | 2,7 | 6,1 |
| Contrainte de traction (MPa) | 3,1 | 3,1 | 5,5 | 5,4 | 6,6 | 7 | 8,5 | 8 | 10 | 9,3 | 9,3 | 9,4 | 4 | 9,1 |
| Présence Al2TiO5 N = non O = oui | N | N | N | N | N | N | N | N | N | N | N | N | O | N |

La présence de faible quantité d'oxyde de zirconium (composition A) permet d'augmenter la température de frittage jusqu'au plus 1350° C, sans qu'apparaisse la phase Al2TiO5. Dans ces conditions, le frittage est amélioré et la résistance mécanique du tube croît avec la température.

L'augmentation de la quantité de zircone (composition B) permet d'accroître encore plus la température de frittage (1375° C) sans apparition de la phase Al2TiO5. Dans les conditions de calcination des tubes de cette série d'essais, la résistance mécanique n'est pas améliorée.

L'oxyde de zirconium a donc un effet inhibiteur sur l'apparition de la phase Al2TiO5. Cet effet se manifeste pour de faibles pourcentages et permet d'accroître la température de frittage avec, pour conséquence, une nette amélioration de la résistance mécanique. Ainsi, pour une forme tubulaire de réalisation, il peut être obtenu un support présentant une porosité supérieure à 25 % et une résistance mécanique définie par la valeur de la contrainte en traction, supérieure à 5 MégaPascals.

### POSSIBILITE D'APPLICATION INDUSTRIELLE :

L'objet de l'invention est destiné à être appliqué dans le domaine de la filtration, au sens général, de molécules ou de particules contenues dans un milieu fluide.

## Revendications

1. Support inorganique destiné à constituer un support pour une membrane de filtration, le support :
- présentant une porosité supérieure à 25 %,
- une résistance mécanique définie par la valeur de la contrainte en flexion pour les supports plans, supérieure à 15 MégaPascals, et par la valeur de la contrainte en traction pour les supports tubulaires, supérieure à 5 MégaPascals,
- étant obtenu par frittage à une température comprise entre supérieure à 1 300°C et 1 500°C,
- comportant :
• une charge minérale :
* présentant une granulométrie supérieure à 20 µm,
* étant un composé métallique contenant un seul métal pris parmi les métaux suivants : aluminium, silicium et titanium,
• et un liant minéral dont le pourcentage pondéral par rapport à la charge est inférieur à 70 %, ledit liant minéral étant soit un grès, soit un titanate de formule **Ti**_{**x**} **M**_{**y**} **O**_{**((4x + vy) /2)**}**,** avec **x** = nombre d'atome gramme de **Ti, y** = nombre d'atome gramme de **M, v** = valence de **M,** où **M** est un métal pris parmi le zirconium, le calcium, le cuivre, le manganèse ou l'aluminium, de manière à comporter un mélange d'oxydes de Ti et M,
- et ne comportant pas de l'aluminate de titane (Al₂TiO₅) susceptible de créer des microfissures au support.

2. Support inorganique selon la revendication 1, **caractérisé en ce que** la charge minérale est de l'alumine.

3. Support inorganique selon la revendication 1, **caractérisé en ce que** la charge minérale est du carbure de silicium.

4. Support inorganique selon la revendication 1, **caractérisé en ce que** la charge minérale est du sable de rutile.

5. Support inorganique selon l'une des revendications 1 à 4, **caractérisé en ce qu'**il comprend au moins une couche séparatrice adaptée pour assurer la séparation des molécules ou des particules contenues dans un milieu fluide à traiter.

6. Procédé de préparation d'un support inorganique tel que défini à la revendication 1, **caractérisé en ce qu'**il consiste :
- à préparer une charge minérale présentant une granulométrie supérieure à 20 µm et formant un composé métallique contenant un seul métal pris parmi les métaux suivants : aluminium, silicium et titanium,
- à préparer un liant minéral dont le pourcentage pondéral par rapport à la charge est inférieur à 70 %, ledit liant minéral étant soit un grès, soit un titanate de formule **Ti**_{**x**} **M**_{**y**} **O**_{**((4x + vy) /2)**}**,** avec **x** = nombre d'atome gramme de **Ti, y** = nombre d'atome gramme de **M, v** = valence de **M,** où **M** est un métal pris parmi le zirconium, le calcium, le cuivre, le manganèse ou l'aluminium, de manière à comporter un mélange d'oxydes de Ti et M,
- à mélanger la charge minérale et le liant minéral avec au moins un adjuvant choisi parmi un liant, un lubrifiant ou un défloculant,
- à assurer le broyage en milieu aqueux dudit mélange,
- et après séchage et extrusion du mélange, à assurer une opération de frittage à une température comprise entre supérieure à 1 300°C et 1 500 °C, de manière à obtenir un support :
• présentant une porosité supérieure à 25 %,
• une résistance mécanique définie par la valeur de la contrainte en flexion pour les supports plans, supérieure à 15 MégaPascals, et par la valeur de la contrainte en traction pour les supports tubulaires, supérieure à 5 MégaPascals, sans toutefois comporter de l'aluminate de titane (Al₂TiO₅) susceptible de créer des microfissures au support.

7. Procédé de préparation selon la revendication 6, **caractérisé en ce qu'**il consiste à mélanger la charge minérale et le liant minéral se présentant sous la forme d'oxyde de titane et d'oxydes du métal **M**.

8. Procédé de préparation selon la revendication 6, **caractérisé en ce qu'**il consiste à mélanger la charge minérale et le liant minéral se présentant sous la forme d'oxyde de titane et d'un sel du métal **M**.

## Patentansprüche

1. Anorganischer Träger, der dazu bestimmt ist, einen Träger für eine Filtrationsmembran zu bilden, wobei der Träger
- eine Porosität von mehr als 25 % aufweist,
- eine mechanische Festigkeit, die definiert ist durch den Wert der Biegespannung für ebene Träger, von mehr als 15 Megapascal, und durch den Wert der Zugspannung für röhrenförmige Träger, von mehr als 5 Megapascal besitzt,
- durch Sintern bei einer Temperatur zwischen mehr als 1.300°C und 1.500°C erhalten wird,
- umfasst:
• einen mineralischen Füllstoff, der
* eine Korngröße von mehr als 20 µm aufweist,
* eine Metallverbindung ist, die ein einziges Metall aus den folgenden Metallen enthält: Aluminium, Silicium und Titan,
• sowie ein mineralisches Bindemittel, dessen Gewichtsanteil in Bezug auf den Füllstoff kleiner als 70 % ist, wobei das mineralische Bindemittel entweder ein Sandstein oder ein Titanat der Formel TiₓM_{y}O_{((4x + vy)/2)} ist, mit
x = Anzahl der Gramm-Atome Ti, y = Anzahl der Gramm-Atome M, v = Wertigkeit von M, wobei M ein Metall ist, das aus Zirkonium, Calcium, Kupfer, Mangan oder Aluminium so gewählt ist, dass es ein Gemisch aus Oxiden von Ti und M umfasst,
- und kein Titanaluminat (Al₂TiO₅) aufweist, das an dem Träger Mikrorisse zu erzeugen vermag.

2. Anorganischer Träger nach Anspruch 1,
**dadurch gekennzeichnet, dass** der mineralische Füllstoff Aluminiumoxid ist.

3. Anorganischer Träger nach Anspruch 1,
**dadurch gekennzeichnet, dass** der mineralische Füllstoff Siliciumcarbid ist.

4. Anorganischer Träger nach Anspruch 1,
**dadurch gekennzeichnet, dass** der mineralische Füllstoff Rutilsand ist.

5. Anorganischer Träger nach einem der Ansprüche 1 bis 4,
**dadurch gekennzeichnet, dass** er wenigstens eine Trennschicht umfasst, die die Trennung von Molekülen oder Partikeln, die in einem zu behandelnden flüssigen Medium enthalten sind, zu gewährleisten vermag.

6. Verfahren zur Herstellung eines anorganischen Trägers wie in Anspruch 1 definiert,
**dadurch gekennzeichnet, dass** es darin besteht:
- einen mineralischen Füllstoff herzustellen, der eine Korngröße von mehr als 20 µm aufweist und eine Metallverbindung bildet, die ein einziges Metall aus den folgenden Metallen enthält: Aluminium, Silicium und Titan,
- ein mineralisches Bindemittel herzustellen, dessen Gewichtsanteil in Bezug auf den Füllstoff kleiner als 70 % ist, wobei das mineralische Bindemittel entweder ein Sandstein oder ein Titanat der Formel TiₓM_{y}O_{((4x + vy)/2)} ist, mit x = Anzahl der Gramm-Atome Ti, y = Anzahl der Gramm-Atome M, v = Wertigkeit von M, wobei M ein Metall ist, das aus Zirkonium, Kalzium, Kupfer, Mangan oder Aluminium so gewählt ist, dass es ein Gemisch aus Oxiden von Ti und M umfasst,
- den mineralischen Füllstoff und das mineralische Bindemittel mit wenigstens einem Zusatzstoff zu mischen, der aus einem Bindemittel, einem Schmiermittel oder einem Entflockungsmittel gewählt ist,
- das Zerkleinern dieses Gemisches in wässriger Umgebung zu gewährleisten,
- und nach dem Trocknen und Extrudieren des Gemisches eine Sinterung bei einer Temperatur zwischen mehr als 1.300°C und 1.500°C zu gewährleisten, so dass ein Träger erzielt wird, der
• eine Porosität von mehr als 25 % aufweist,
• eine mechanische Festigkeit, die definiert ist durch den Wert der Biegespannung für ebene Träger, von mehr als 15 Megapascal, und durch den Wert der Zugspannung für röhrenförmige Träger, von mehr als 5 Megapascal besitzt, ohne jedoch Titanaluminat (Al₂TiO₅) aufzuweisen, das an dem Träger Mikrorisse zu erzeugen vermag.

7. Herstellungsverfahren nach Anspruch 6,
**dadurch gekennzeichnet, dass** es darin besteht, den mineralischen Füllstoff und das mineralische Bindemittel in der Form von Titanoxid und Oxiden des Metalls M zu mischen.

8. Herstellungsverfahren nach Anspruch 6,
**dadurch gekennzeichnet, dass** es darin besteht, den mineralischen Füllstoff und das mineralische Bindemittel in der Form von Titanoxid und eines Salzes des Metalls M zu mischen.

## Claims

1. An inorganic support designed to constitute a support for a filter membrane, the support:
· having porosity greater than 25%;
· having mechanical strength defined by the ultimate bending stress of plane supports greater than 15 MPa, and by the ultimate tensile stress of tubular supports greater than 5 Mpa; and
· being obtained by sintering at a temperature greater than 1300°C and not greater than 1500°C;
· the support comprising:
• an inorganic feedstock:
* having a grain size greater than 20 µm; and
* being a metal compound containing a single metal selected from the following metals: aluminum, silicon, and titanium; and
• an inorganic binder whose percentage by weight relative to the feedstock is less than 70%, said inorganic binder being either a clay or a titanate having the formula Tiₓ M_{y} O_{((4x+vy)/2)}, with x = number of gram atoms of Ti, y = number of gram atoms of M, v = valence of M, where M is a metal selected from zirconium, calcium, copper, manganese, or aluminum, so as to include a mixture of oxides of Ti and Mi; and
· not comprising titanium aluminate (Al₂TiO₅) liable to create microcracking of the support.

2. An inorganic support according to claim 1, **characterized in that** the mineral feedstock is alumina.

3. An inorganic support according to claim 1, **characterized in that** the inorganic feedstock is silicon carbide.

4. An inorganic support according to claim 1, **characterized in that** the inorganic feedstock is rutile sand.

5. An inorganic support according to any one of claims 1 to 4, **characterized in that** it includes at least one separator layer adapted to separate molecules or particles contained in a fluid medium to be treated.

6. A method of preparing an inorganic support as defined in claim 1, **characterized in that** it consists:
· in preparing an inorganic feedstock having a grain size greater than 20 µm, and forming a metal compound containing a single metal selected from the following metals: aluminum, silicon, and titanium;
· in preparing an inorganic binder whose percentage by weight relative to the feedstock is less than 70%, said inorganic binder being either a clay or a titanate having the formula Tiₓ M_{y} O_{((4x+vy)/2)}, with x = number of gram atoms of Ti, y = number of gram atoms of M, v = valence of M, where M is a metal selected from zirconium, calcium, copper, manganese, or aluminum, so as to include a mixture of oxides of Ti and Mi;
· in mixing the inorganic feedstock and the inorganic binder with at least one additive selected from a binder, a lubricant, and a deflocculating agent;
· in milling said mixture in an aqueous medium; and
· after drying and extruding the mixture, in performing a sintering operation at a temperature greater than 1300°C and not greater than 1500°C, in such a manner as to obtain a support:
• having porosity greater than 25%; and
• having mechanical strength defined by the ultimate bending stress of plane supports greater than 15 MPa, and by the ultimate tensile stress of tubular supports greater than 5 Mpa, without however comprising titanium aluminate (Al₂TiO₅) liable to create microcracking of the support.

7. A preparation method according to claim 6, **characterized in that** it consists in mixing the inorganic feedstock and the inorganic binder in the form of titanium oxide and oxides of the metal M.

8. A preparation method according to claim 6, **characterized in that** it consists in mixing the inorganic feedstock and the inorganic binder in the form of titanium oxide and a salt of the metal M.
